# EUROPEAN PATENT APPLICATION

(11) **EP 4 266 264 A1**
(43) Date of publication of application: **25.10.2023**
(21) Application number: 22305578.1
(22) Date of filing: 20.04.2022
(51) Int. Cl.: G06V 30/40

(54) **UNCONSTRAINED AND ELASTIC ID DOCUMENT IDENTIFICATION IN AN RGB IMAGE**

(71) Applicant: Thales Dis France SAS, 92190 Meudon (FR)
(72) Inventor: LEE, Rhui Dih, 650623 Singapore (SG); DUGAND, Juan-David, 13090 AIX EN PROVENCE (FR); BEZIAT, Michel, 75013 PARIS (FR)
(74) Representative: Grevin, Emmanuel

(57) **Abstract**

Provided is a method for classifying a type (151) of identification (ID) document (102) byway of Artificial Intelligence (Al) deep machines. An inference phase (100) is disclosed for detecting (200) and identifying (300) said type (151), applying a nearest neighbor search (321) within the reference database (322), and from results of said search (321), presenting a list (150) of ID document types (151) ranked (323) according to a most probable match of the ID document (102). A training phase (400) is disclosed for acquiring learned information of said types from a dataset (161) of images, building AI models for each of location (CNN 210), orientation (CNN 230) and recognition (CNN 310), and creating a reference database (322) of embedding vectors. Other embodiments are disclosed.

## Description

### TECHNICAL FIELD

The present invention relates generally to classification of identification documents, and more particularly to a computer-implemented method, that by way of artificial intelligence (Al) deep learning, identifies a specific type of identification document captured in an image, in part or whole, and provides for database configuration of types without re-training AI models.

### BACKGROUND

Physical secure documents or documents of value, such as official identity documents (e.g., identity card, passport, driver's license, health insurance card, firearm owner's identification card, boating license, fishing license, commercial driver's license, etc.), are documents used to prove a person's identity. An identity document is used to connect a person to information about the individual whose information is typically represented as data in a database. ID documents are used to verify that the person presenting the document is actually that person shown and referenced in the document. Typically, the verification is done by a verifier that knows which security patterns to check for in the identification document. The security patterns are used not only to confirm authenticity of the individual, but also authenticate the identification document itself. To this point, the issuer of the identification document typically creates and formats documents of the same type in a similar way to conform with a particular presentation theme of the security patterns for that particular license or identification document. Among other reasons, the color and style distinguishes the type of identification document with respect to the issuing agency or type of document. As an example, a passport from one country may provide indication of the country, where it was issued, who it was issued to, expiration dates and so on, along with country colors, character fonts and sizes specific to the country theme. The format of the passport as set by the issuing agency will be specific to that agency's country document formatting requirements.

In the Internet era, new services, systems and automated kiosk systems are becoming more and more prominent, as they allow users to register, enroll or use a service in a convenient way with or without physical presence by way of their identification documents. Understandably, some services need to authenticate secure documents held by end users in order to permit them to access the services. Authentication is the process or action of proving or showing something to be true, genuine, or valid; in this case, to validate that the user who is presenting the document is really that person. To this point, the end users may send a photo of the required document to service providers' systems for on-line or off-line verification, or otherwise present a captured image of their identification document. In other situations, the service system or kiosks itself may be equipped with a camera to take a picture, or scan, the identification document. Often, when authentication is at issue, the quality of the ID document interpretation depends on the quality of the image. High-resolution image processing for authentication can also be a computationally intensive task with high quality images. However, where other non-specific and non-authentication activities related to the ID document itself are desired, such high quality images and intense computational processing may be more than necessary.

Currently, many of the identification (ID) document scanning systems used for authentication use optical character recognition (OCR), a technology solution for automating data extraction from printed or written text from a scanned document or image file and then converting the text into a machine-readable form to be used for data processing like editing or searching. OCR software singles out letters on the image, puts them into words and then puts the words into sentences, thus enabling access to and editing of the original content. It also eliminates the need for manual data entry. It uses a combination of hardware and software to convert physical, printed documents into machine-readable text. Hardware, such as an optical scanner or specialized circuit board, copies or reads text; then, software typically handles the advanced processing. Although OCR can convert text with a high degree of accuracy, the systems are expensive, do require checking, and generally not considered worth doing for little amounts of text or where image resolution is poor, such as a low-resolution camera.

OCR software can take advantage of artificial intelligence (Al) to implement more advanced methods of intelligent character recognition (ICR), like identifying languages or styles of handwriting. However, there are limitations on the current implementations with respect to how the image information itself can be pre-processed and presented to the AI system to achieve better detection and identification capabilities for cases where non-specific identification (e.g. non-authentication related tasks) of the individual that holds the ID document is required. Individual characteristics, such as, hair color, eye color, weight, signatures, addresses, residences, are highly specific to the person, and can be more easily discerned.

Alternatively, where a passport agency may desire to update its overall format (e.g., colors, fonts, symbols, location of information) of the document-unrelated to the identification portions of the individual (e.g. photo, user name, user address, signature, etc.) in possession of the passport-it may alter or revise non-specific individual identifying information, such as the country illustration, watermark images, transparency strips, logos, location of symbols, arrangements, and so on. These portions of the ID document are non-specific to the individual assigned the passport. The same applies to other documents, such as driver's licenses, or other ID documents. These features are unique to the issuing agency of the ID document, but not necessarily the individual; the common features are less distinguished than personal identifying characteristics. Moreover, the current high quality OCR systems directed to extracting the user specific details of the document are generally independent and isolated with respect to document format reference databases. That is, the OCR systems do not seem to inquire into database systems that maintain real-time ID document format requirements or type sets beyond the personal data required to identify or authenticate the individual.

In these situations, where document formats have been updated, verifiers of ID documents that do not have direct access or knowledge of the formats of the most recent issuing ID documents have the additional burden of determining which portions of the ID document are specific to the individual's identify and which portions are specific to that of the ID document issuing agency. Although current AI approaches may assist in interpreting user specific identification information, the solutions are inadequate with regard to helping verifies filter out un-related ID document format information from the user identification information sections of the ID document. Some verifiers equipped with high-resolution image scanners and OCR equipment, as a first screening step, may just want to initially assess what type of ID document they are being presented without resorting to high-quality or computationally expensive image processing to determine where the document was issued, who the issuing agency was, and so on. In addition, this becomes a more prominent concern where the issuing agency updates its format requirements, because the verifier is not directly coupled to the issuing agency ID document format reference databases.

Briefly, US 10,956,744 provides a gateway for scanning and/or processing paper forms and/or physical IDs to generate an initial categorization of the scanned image as one of a form image, ID image, natural image, blank image, or other. One embodiment is directed to determining the authenticity of a form, including an initial gateway determination of whether an input image is a form image or not. Another is directed to determining whether or not the incoming scanned image belongs to the scanned image category that a given image authentication station or functionality can accommodate e.g. by making initial determination of whether an input image is an ID image or not. Although, co-pending patent document WO 2013014667 A2 describes a system and methods for computerized machine-learning based authentication of electronic documents, they appear directed to use of linear programming for classification.

US 10217179 entitled "System and method for classification and authentication of identification documents using a machine learning based convolutional neural network" discloses means to classify and authenticate ID documents based on the information contained on the face of the ID document to address concerns of fraudulent, or fake, ID documents. It can automatically classify, authenticate, and extract data from documents using artificial intelligence (Al) based machine learning for image recognition to authenticate fixed format documents (e.g. currency, stamps, securities, certificates, permits, invoices, and forms).

US2019197642A1 provides a method for classification and authentication of identification documents using a convolutional neural network to authenticate an ID document with respect to an individual, but is silent with regards to identifying the type, or other issuing characteristics, of the ID document, and/or with respect to a reference database. Aspects of an authentication manager used to normalize the image of the physical document appears limited to disclosure of removing a background from the image, rotating the image, deskewing the image, removing a glare from the image, correcting an exposure of the image, or correcting a blur of the image. It provides for a standalone method to authenticate an ID document after classification, and a gateway image processor operative for on-line filtering of an incoming scanned image to determine whether or not the incoming scanned image belongs to the category which one or more specific authentication service providers are capable of authenticating.

### SUMMARY

In order to solve the above mentioned technical problem, the present invention provides an enhanced method for identifying and classifying a type of identification document from an RGB image in a robust and elastic way, and maintaining a reference database of document types in a more accurate and efficient manner without the need of high-quality scanners and computationally intense image processing OCR systems. The advantages and features of the system and the computer program method associated therewith, according to the embodiments, provide ease of use with any camera, used to capture a portion or entire image of an ID document, via an Red Green Blue (RGB) image from a low-quality device, whether a low quality phone camera or high quality scanner.

The invention is modular in that it's detection and identification modules are separately configurable for both an inference phase, where identification is at issue, and a training phase, where characteristic ID document patterns are learned, and also, for database access to update ID document types. It is unconstrained in that the ID document can be presented in front of camera in any situation, as long as it is not blocked by other objects. It is elastic in that the ID document to be recognized can be configured for database entry easily, by removing obsolete or adding new ID document information (e.g. embedding vectors) in the reference database, without re-training of the AI model. This allows an issuing agency to update the reference database without the need to retrain, an otherwise, computational and time intensive task, for example, when a new ID document in a certain country is created. It is robust in that any quality (low or high pixel resolution, or color depth such as RGB) of ID Document can be adjusted as the same procedure as described by the elastic property.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1A** illustrates a high-level inference phase for identifying a type of identification (ID) document in accordance with one embodiment;
**FIG. 1B** depicts lower-level aspects of FIG. 1A for detection and identification in accordance with one embodiment;
**FIG. 2** pictorially breaks down certain detection steps of FIG 1B in accordance with one embodiment;
**FIG. 3A** pictorially breaks down certain identification steps of FIG 1B in accordance with one embodiment;
**FIG. 3B** pictorially illustrates identification steps for associating and building a reference database in accordance with one embodiment;
**FIG. 3C** depicts an exemplary entry table for reference database along with search inquires therein and ranking therefrom in accordance with one embodiment;
**FIG. 4A** illustrates a training phase for learning a type of identification (ID) document in accordance with one embodiment;
**FIG. 4B** depicts lower-level aspects of FIG. 4A for learning an identification of ID document type and generating embedding vectors in accordance with one embodiment;
**FIG 5** illustrates a system for classifying a type of an identification (ID) document in accordance with one embodiment; and
**FIG. 6** depicts an exemplary diagrammatic representation of a machine and hardware platform suitable for use to perform the methods in accordance with an embodiment.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

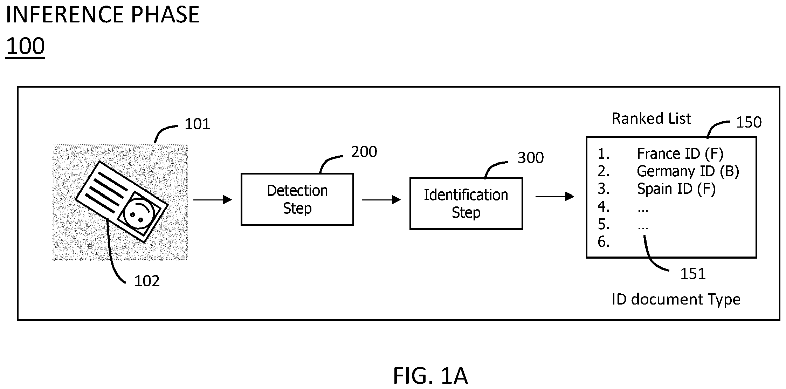

**FIG. 1A** illustrates a high-level inference phase for identifying a type (151) of identification (ID) document in accordance with one embodiment. The inference phase 100 is one part of a method for inferring and classifying, the type (151) of identification (ID) document (102), whereby a hardware device, such as a camera or scanner, captures an image (101) or picture of an ID document (101), in part or whole, in any orientation. Understandably, the image contains, somewhere within it, distinguishing details, including but not limtied to security patterns, of the ID document 102. The second part of the method is the training phase, whereby the "type" of ID document is learned, regardless of orientation, from the distinguishing details and security patterns of other images and information types of ID documents in a reference database.

The two major steps of the inference phase (100) are the 1) detection steps (200), and, 2) the identification steps (300). The output of the detection steps 200 is a well cropped and correctly oriented ID document image 102. The output of the identification steps 300 is a list 150 of ranked document types (151) based on likelihood. The type 151, for example, can be one of the issuer of an identity card, passport, driver's license, health insurance card, firearm owner's identification card, boating license, fishing license, commercial driver's license, etc. or other relevant descriptive content to type the ID document to a classification. In one embodiment, the type 151 indicates of one of a country, a state, and a city, and one of an issuing agency, department, and bureau. The type 151 may further indicate a page, format, use, permission, or other aspect of the ID document 101. The inference phase 100 helps verifiers assess if the ID document 102 in the image 101, for example, is a French passport, U.S. passport, or, other identification document issued by the same or another agency. In practice, the inference phase 100 provides as output a list (150) of ID document types ranked according to a most probable match of the (otherwise unknown) image 101.

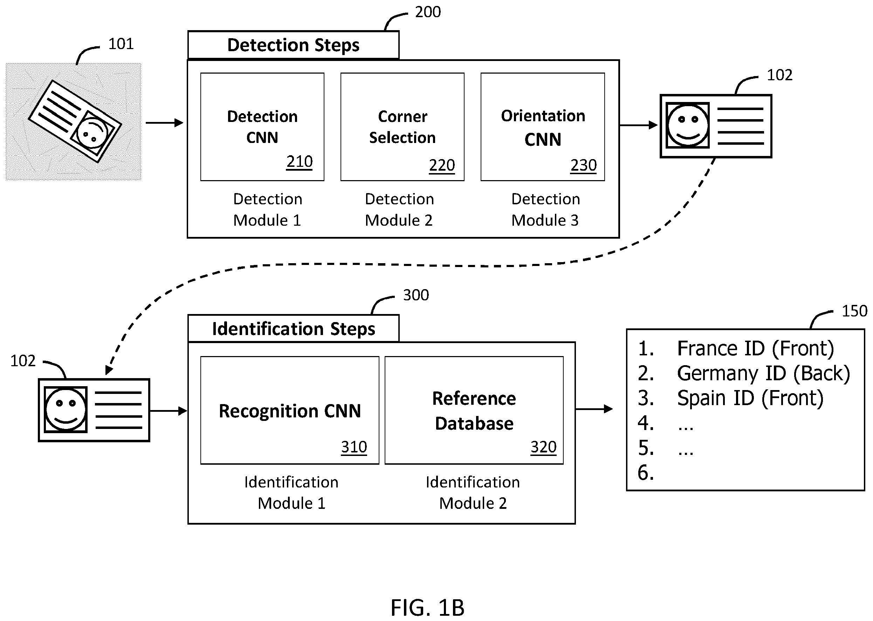

**FIG. 1B** depicts details of the detection and identification aspects in accordance with one embodiment. Briefly, detection steps (200) are implemented via modular detection modules 1 to 3. Detection module (210) applies a convolutional neural network (CNN) to identify location information comprising bounding box information and corner information of said ID document (102) in said image 101. Detection module (220) selects corners and normalizes, said ID document (102) in said image 101 from said location information to produce a normalized ID document image (101B). Detection module (230) applies an orientation classification CNN to said normalized ID document image (101B) to correctly orient (102) it.

Identification steps (300) are implemented via modular identification modules 1 to 2. Identification module 1 (310), performs Region of Interest (ROI) cropping on normalized, and correctly oriented, ID document image (101B), and represent each ROI by an embedding vector. Identification module 2 (320) applies a nearest neighbor search (321) within a reference database (322) using the embedding vector (312). From results of the search, it presents a list (150) of ID document types ranked (323) according to a most probable match of the unknown image to learned information of types of the ID document in the reference database.

A Convolutional Neural Network (CNN) is a Deep Learning algorithm used to analyze imagery which can take in an input image, assign importance (e.g., learnable weights and biases) to various aspects and objects in the image and be able to differentiate one from the other. CNNs are a specialized type of neural networks that use convolution in place of general matrix multiplication in at least one of their layers, mostly used in image recognition and processing specifically designed to process pixel data. It consists of consists of an input layer, hidden layers and an output layer. The pre-processing required in a CNN is much lower as compared to other classification algorithms. Convolutional layers convolve the input and pass its result to the next layer. This is similar to the response of a neuron in the visual cortex to a specific stimulus. Each convolutional neuron processes data only for its receptive field.

Accordingly, for an image represented by Red, Green, Blue (RGB) vector components, each vector may correspond to a receptive layer of the CNN. As the pixel resolution (bit-level) increases and the image resolution as established by the number of pixels increases, processing becomes computationally burdensome. The CNN is especially configured to reduce the images into a form which is simpler to process without sacrificing feature reduction while maintaining its ability to discriminate and classify images. Convolution operations are provided by way of a kernel that filters across dimensionalities (e.g., x,y,z) to extract high-level features such as edges. Each layer in the CNN may employ a specific kernel for a particular purpose, such as, gradient, color, orientation, etc.

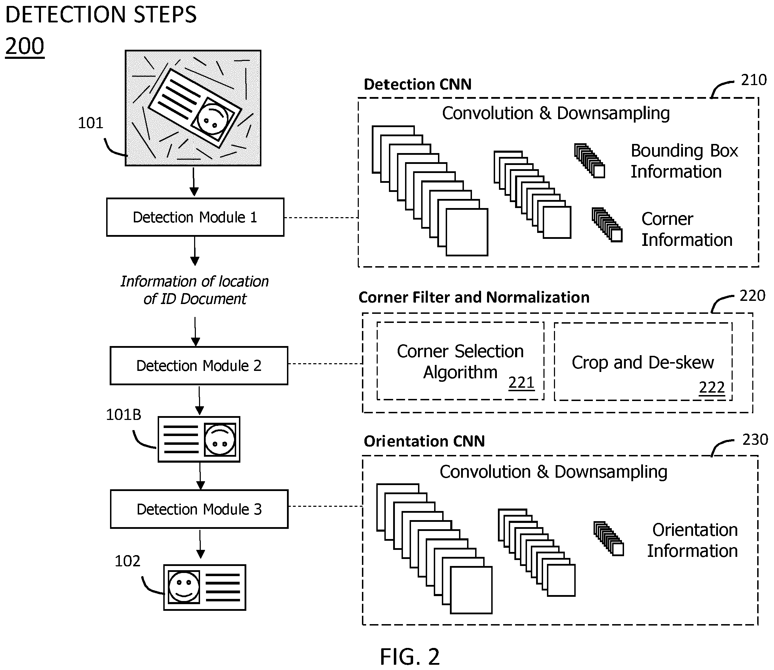

**FIG. 2** pictorially breaks down certain detection steps 200 of FIG 1B in accordance with one embodiment. As shown, the final output of detection steps 200 result in a well-cropped, normalized, and correctly oriented ID document 102. In practice, any input image 101 or frame can be processed and passed as input to Detection Module 1, which produces as output the location information (e.g., bounding box and corners) of the ID document 102 within the image 101. Detection module 1 (210) applies the convolutional neural network (CNN), which performs convolution and downsampling, to produce the location information comprising bounding box information and corner information of portions of the unknown image 102 in said ID document 101. The location information is then passed as input to Detection Module 2.

Detection module 2 (220) applies the corner filter by way of a corner selection algorithm 221, and then from the corner information, crops and de-skews the image as part of a normalization process. The output is a normalized document image 101B, but as can be seen in the figure, has not yet been adjusted or corrected for orientation. Image normalization is used to change the range of pixel intensity values, for example, to compensate for poor contrast due to glare, or tilting of the camera when the picture was taken, scaling or reflection issues, histogram balance, stretching, contrast, and lighting, among other correction factors. Deskewing is the process of straightening an image that has been scanned or written crookedly; that is, an image that is slanting too far in one direction, or one that is misaligned. Cropping is the removal of unwanted outer areas, namely, those portions irrelevant, unnecessary, or serving of little value with respect to the security patterns or other image features relevant to categorizing or classifying the embedded ID document 102 in the image. The normalized ID Document image is then passed as input to the Detection Module 3.

Detection Module 3 receives the normalized, but not yet correctly oriented, document image 101B to extract orientation information (e.g., slanted, rotated, vertical, horizontal and specified as either degrees, coordinates or rotations) for correcting the orientation of the ID document image 101B. The output of this module is a correctly oriented and normalized ID document 102. To achieve this, detection module 3 (230) applies an orientation classification CNN to each said normalized portion to correctly orient (102) each said normalized portion. This CNN is specifically trained to predict a rotation angle needed to correct the orientation. The convolutional kernels in this CNN can use two and three-dimensional kernels to compute different features related to the rotation.

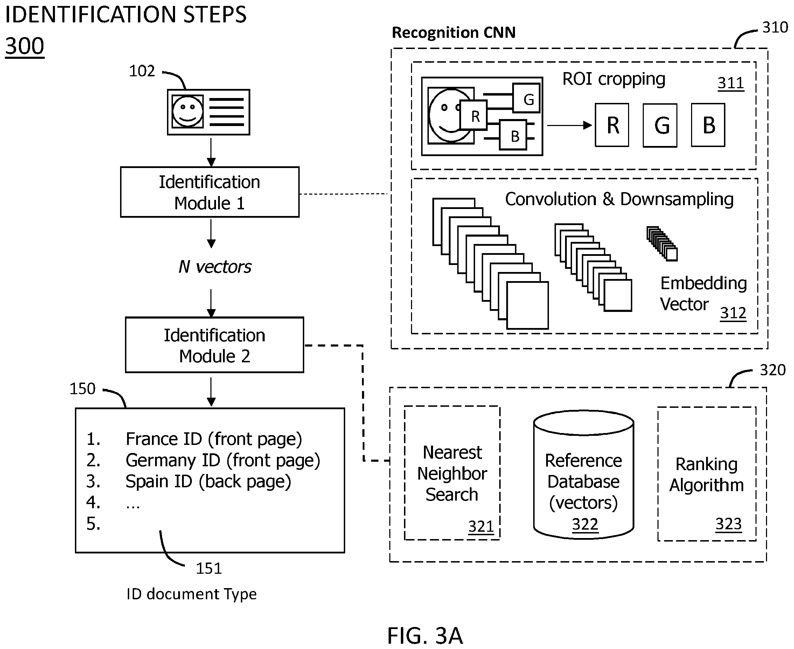

**FIG. 3A** pictorially breaks down certain identification steps 300 of FIG 1B in accordance with one embodiment. It contains two main modules: Identification Module 1 (310) - ID Document Recognition CNN, and Identification Module 2 (320) - ID Document Reference Database. As shown, the output of identification steps 300 result in a list 150 of ranked document type 151 based on likelihood. In practice, the output (i.e. correctly oriented and normalized ID document 102) of detection step 200 is passed as input to Identification Module 1, which is then additionally, or further, cropped based on preset locations, into distinct pieces, resulted in several ROIs (region of interest); termed, ROI cropping 311. To note, this is distinct from the cropping in the detection steps 200 whereby there the ID document was cropped as a whole from within the image 101. In the identification steps 300, the ROI "cropping" is performed, in part and parcel, within regions of interest within the ID document 102 itself. The ROI cropping here uses "preset" location information, which is not limited to the location information obtained from a previous detection step, but instead can include registered document requirement, or policy, information, obtained independently or through the AI training phase (400) of this same identification module 1. In the independent embodiment described, the preset location may be provided manually, or retrieved automatically on-line. For example, for a given country passport, the pre-established coordinates and locations of security patterns or feature areas on the passport are downloaded from an agency database, whose data is made public per policy. For example, a passport issuing agency providing policy location data (e.g. <x,y,z> picture, country code, passport number, marking, etc.) can be used as the preset location information for later performing the ROI cropping.

Here, ROI cropping can also be applied across image component vectors, for example, the individual vectors of an RGB image, as seen by the "R", "G" and "B" designations of the figure. In other cases, the preset locations may be confirmed, revised or updated based on the training phase 400 using the AI modeling described ahead. Convolution and downsampling is optionally applied to these cropped regions of interest whereby the output of Identification Module 1 (310) results in a set of N vectors, each representing an embedding vector 312. This output is then passed as input to Identification Module 2 (320) whereby a nearest neighbor search (321) is performed within the reference database (322) using the plurality of embedding vectors (312), and from results of the search, presents the list (150) of ID document types (151) ranked (323) according to a most probable match of the unknown image to learned information of types of such an ID document in the reference database 150.

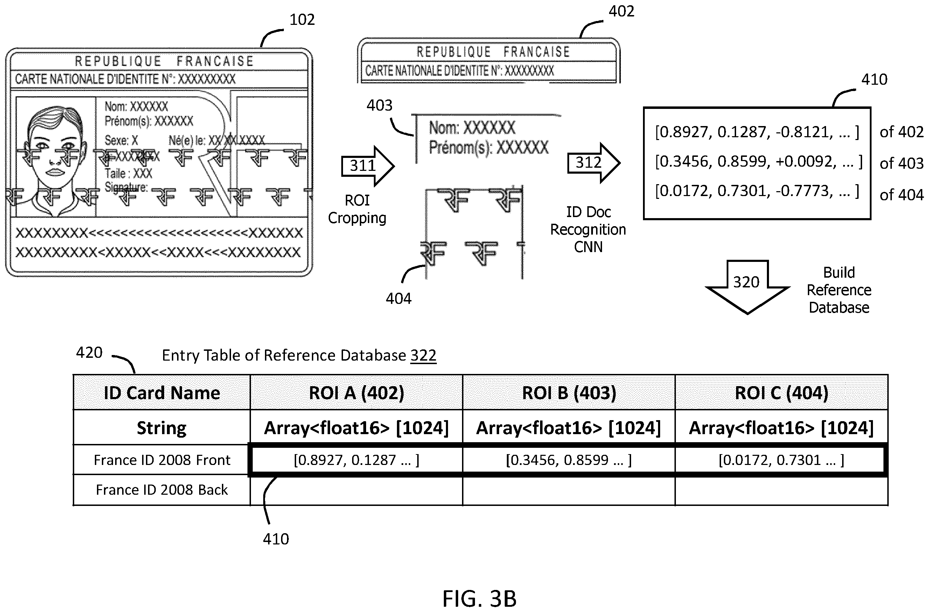

**FIG. 3B** pictorially illustrates identification steps 300 associated with associating and building the reference database 322 in accordance with one embodiment. Reference will also be made to FIG 3A when referring to certain functional components or method steps. As shown, ID document 102, by way of ROI cropping 311 from the Recognition CNN 310 in Identification Module 1, produces regions of interest 402, 403, and 404. Recall, such patterns are used not only to confirm authenticity of the individual, with respect to authenticating that the individual was issued this document by a paricular agency, but can be used to identify the document itself. The issuer of the identification document may create and format documents of the same type in a similar way to conform with a particular presentation theme of the security patterns for that particular license or identification document. Among other reasons, the style distinguishes the type of identification document with respect to the issuing agency or type of document. As an example, a passport from one country may provide indication of the country, where it was issued, who it was issued to, expiration dates and so on, along with country colors, character fonts and sizes specific to the country theme. The format of the passport as set by the issuing agency will be specific to that agency's country document formatting requirements each of these patterns may be specific to identifying, or characterizing, an ID document ROI, for instance, a front page, a back page, a tab, an insert, a watermark and so on.

The ROI's, by way of convolution and downsampling steps 311 from the Recognition CNN 310 in Identification Module 1, produce an embedding vector specific to that ROI. For example, the country indication ROI 402 will have its own vector (e.g., 0.8927, 0.1287, -0.8121, ... ], the user information ROI 403 will have its own vector (e.g., [0.3456, 0.8599, +0.0092, ... ], and ROI for the country symbols will have its own vector (e.g., [0.0172, 0.7301, -0.7773, ... ]). The vectors 312 are then assembled as an entry into the entry table 420 of the reference database 322, for example, as a numeric line entry to distinguish that aspect of the ID document. Here as an example, these 3 ROI vectors (A, B, C) are for the front page. Understandably, ROI entries of vectors for the ID document back page are also contemplated and supported in the entry table 420. Moreover, the entry table is not limited to only pages, rather, it can include entries for grouped ROIs, for example, a vector set (row) directed to identifying the issuing agency, the country, the dates (issue/expiration), user portions, and so on.

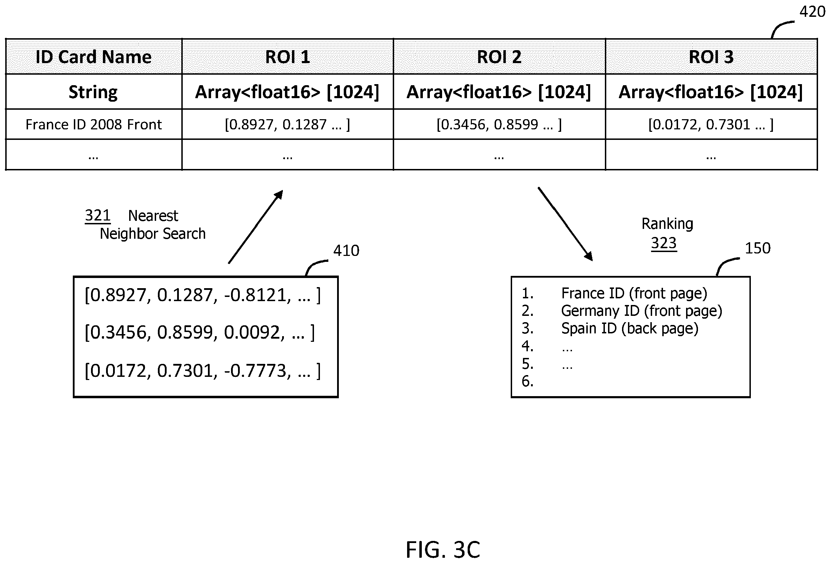

**FIG. 3C** depicts an exemplary entry table 420 for reference database along with search (321) inquires therein and ranking (323) therefrom in accordance with one embodiment. One unique aspect of the entry table of ROI embedded vectors is that it does not require re-training of Al models for search inquires therein and ranking therefrom. That is, once the locations and formats of the ROI have been determined for a given ID document style or theme, those entries can be manually, or automatically, added as entries into the table 420 of the reference database 322 to expand (or contract) the scope of the ID document searching. For example, again, where a passport agency may desire to update its overall format of the document-unrelated to the identification portions of the individual (e.g. photo, user name, user address, signature, etc.) in possession of the passport-it may alter or revise non-specific individual identifying information, such as the country illustration, watermark images, transparency strips, logos, location of symbols, arrangements, and so on; that is, portions of the ID document that are non-specific to the individual assigned the passport. The same applies to other documents, such as drivers licenses, or other ID documents. These features are unique to the issuing agency of the ID document, but not necessarily the individual; the features are less distinguished than personal identifying characteristics. In these cases, the agency, or service provider, can simply revise the reference database 322 with embedded vectors without re-training the AI models.

Neighbor search (NNS), as a form of proximity search, is the optimization problem of finding the point in a given set that is closest (or most similar) to a given point. Closeness is typically expressed in terms of a dissimilarity function: the less similar the objects, the larger the function values. K-nearest neighbor, k-means clustering or binary split KNNs can be employed for higher dimensional searching using mathematically tractable solutions, which can include building index structures that narrow down the search space. A related approach is product quantization (and its relatives), which splits the vectors into products of lower-dimensional spaces. Yet another is locality-sensitive hashing, which uses hash functions to group similar vectors together. These approaches index the centroids or buckets. As part of, or apart from, the search into the reference database 320, the results of the search are ranked according to likelihood, probability, or other machine learning based distance metrics between vectors (e.g., Euclidean distance, Hamming, Cosine similarity, etc.), whereby the presented list (150) of ID document types (151) are ranked (323) according to a most probable match of the unknown image to learned information of types (151) of the ID document (102) in the reference database (322).The reference database (322) is elastically configured, by way of identification module 1 (310) to add new documents and remove obsolete documents for recognition of their type, through addition and removal of embedding vectors (410) in a table (420) in said reference database without re-training.

In this first embodiment, a method has been provided for classifying a type (151) of identification (ID) document (102) by way of Artificial Intelligence (Al) deep learning to associate and identify the ID document (102) against learned types from a captured image (101) or picture of the ID document (102). The method comprises an inference phase (100), consisting of detection steps (200) and Identification steps (300). By way of a detection module 1 (210), it applies a convolutional neural network (CNN) to identify location information comprising bounding box information and corner information of said ID document (102) in said image 101. By way of a detection module 2 (220), it selects corners and normalizing said ID document (102) in said image 101 from said location information to produce a normalized ID document image (101B). By way of a detection module 3 (230), it applies an orientation classification CNN to said normalized ID document image (101B) to correctly orient (102) said captured image (101). In the identification steps (300), by way of an identification module 1 (310), it performs Region of Interest (ROI) cropping on corrected said normalized ID document image (101B), and representing each said ROI by an embedding vector (312). By way of an identification module 2 (320), it applies a nearest neighbor search (321) within a reference database (322) using said embedding vector (312), and from results of said search, and presenting a list (150) of ID document types (151) ranked (323) according to a most probable match of the ID document (102) to learned types in said reference database (322).

In an optimal embodiment, the image (101) is represented by a 3D vector of red, blue, green (RBG) values, and said ROI cropping by way of convolutional neural network includes layering therein of Red, Green, and Blue (RGB) component vectors for each said ROI, and said convolutional neural network (CNN) applies convolution kernels on said RGB component vectors to capture spatial and temporal dependencies of RGB pixels. The spatial and temporal dependencies of RGB pixels can be inferred from one among country depictions, country illustrations, country colors, watermark images, transparency strips, logos, symbols, and relative arrangements thereof in the ID document (102). This allows for said type (151) indication one of a country, a state, or city, and an issuing agency, department, or bureau. All of the convolutional neural network (CNN) can down sample embedding vectors to reduce a dimensionality, for example 3D → 2D →1D, and to reduce the amount of data.

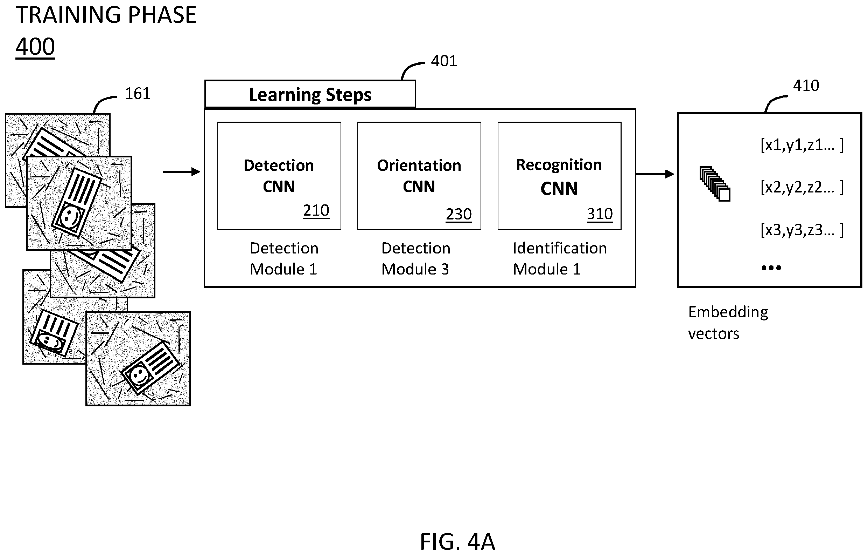

Referring now to **FIG. 4A****,** as a second embodiment, a training phase 400 is disclosed for acquiring learned information of the types 151 of various ID document formats in the reference database 320. The input to the training phase is a vast dataset 161 of images or pictures containing therein, ID documents of various orientations and sizes, each of different resolution quality (e.g. pixel-depth, pixel values, etc.), format (e.g. RGB, HSV, HSI, CMYK, etc.), quality (e.g. granular, smooth, edgy, smeared, faded, darkened, lightened, etc.) and colorations (e.g. hue, saturation, brightness, chromacity, etc.). By way of the training phase, the system learns the type from generic non-specific individual information for non-authentication purposes, for example, one among country depictions, country illustrations, watermark images, transparency strips, logos, symbols, and arrangements thereof in the ID document.

Training is achieved by way of the detection modules 1 and 3, and identification module 1. Detection module 1 (210) applies supervised multi-task learning by way of the convolutional neural network (CNN) for ID document detection to produce as output, location information of portions of known images of ID documents in any scene and orientation. It is a supervised learning paradigm because the input images 161 are labeled and the CNN is constrained to use these labels in its decision making process for minimizing its error surfaces; that is, it is trained to detect the underlying patterns and relationships between the input features of the images 161 according to the output labels. Moreover, it incorporates Multi-task learning, a subfield of machine learning, whereby multiple learning tasks are solved at the same time, while exploiting commonalities and differences across tasks, for example, tasks to discern the aforementioned quality (e.g. pixel-depth, pixel values, etc.), format (e.g. RGB, HSV, HSI, CMYK, etc.), quality (e.g. granular, smooth, edgy, smeared, faded, darkened, lightened, etc.) and colorations (e.g. hue, saturation, brightness, chromacity, etc.).

Detection module 3 (230) applies supervised classification learning by way of the orientation classification CNN to produce as output, orientation information for each of the portions from images of cropped ID document in any orientation using the location information. Orientation classification is the process of taking an input and outputting a probability of orientation to a class (e.g. degrees, numbers, labels, etc.). This depends on the training. For example, it could be trained to learn whether an image is rotated by 15 degree increments in the class set of degrees (0-15,16-30,31-45...345-359), or class set of degree patterns (e.g., 0, 45R, 90R, 45L, 90L, or -90,-45,0,45,90).

Identification module 1 (310) applies unsupervised learning by way of the recognition CNN to learn Regions of Interest (ROIs) from the orientation information to produce as output, an embedding vector for storage to the reference database. The training is unsupervised in the sense that it learns patterns from unlabeled, or untagged, data; that is, the CNN is not informed of what pattern it is learning, but rather, learns from self-organization and inference of patterns within datasets. In an optimal embodiment, the type (151) of ID document (102) is learned, and determined, according to a format and presentation requirement of an issuing agency, bureau, or service provider of said ID document for said ID document.

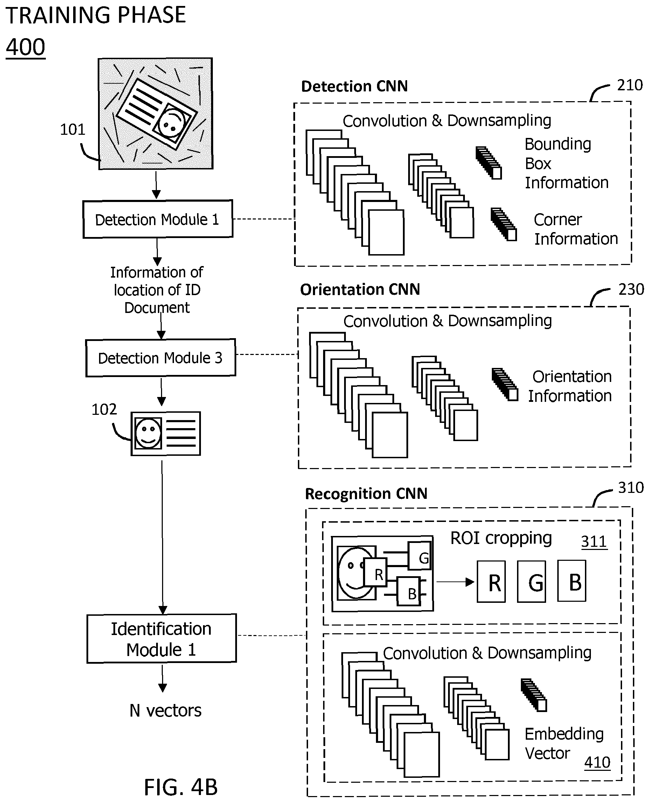

**FIG. 4B** depicts lower-level aspects of FIG. 4A for learning an identification of ID document type and generating embedding vectors in accordance with one embodiment. Here was see the modularity of the components configured from use in the inference phase (100) for use in the training phase (400). The training is achieved via modular components also used in the detection steps 200 and the identification steps 300; namely, Detection CNN 210, Orientation CNN 230 and Recognition CNN 310. Notably, the configuration and order of the modular CNN components here differs from before, and hence, is what provides for ease of use and configurability between the inference phase 100 and the training phase 400. This CNN modularity provides an advantage in that the same AI models used for training are directly applicable to the inference phase by way of their input/output connectivity depending on function; that is, inference or training.

Briefly, Detection module 1 (210) applies the convolutional neural network (CNN) to learn the location information comprising bounding box information and corner information of portions of the ID document 102 in the image 101. Convolution is inherent with the use of the kernels therein. Downsampling is used to reduce the dimensionality. Detection module 3 (230) incorporates an orientation classification CNN to correctly learn the orientation of the ID document 102, but, for training, does not need to correct the orientation. Moreover, it should be noted that in the training phase, Detection module 2 (220) (see FIG 2) for corner filtering and normalization (ROI cropping and de-skewing) are not applied. This is because the need to define ROI's as entries into the reference database 322 are NOT a necessary part of training. Briefly, the corner algorithm and ROI cropping are relevant (in later steps after training) for building and maintaining (e.g. update, adjust, add/remove entries) the reference database (after training) because the entries are specific to the ROIs. Training is initially the first part, and inference is the second part. The CNNs in the training phase 400 learn the location and orientation information from the presented data set 161. But the training CNNs do not need to apply corrections for orientation or location.

For training purposes, the Detection CNN 210 in conjunction with the Orientation CNN 230 modularly serve to first learn the location of the ID document as a whole, and then learn the orientation of the ID document as a whole, rather than the individual locations and orientations of the respective ROI's therein. Moreover, the training does not need to correct for the orientation of the ID image; the CNN inherently accounts for orientations as part of its machine learning process, and this information is stored within its weights. Correction for orientation (by way of the corner filter and normalization) becomes necessary only in the inference phase where ROI cropping is necessary to pull out the distinguishing features that will be mapped to the "preset" locations of the ID document according to their disclosed (e.g. public policy) format and requirements as previously discussed.

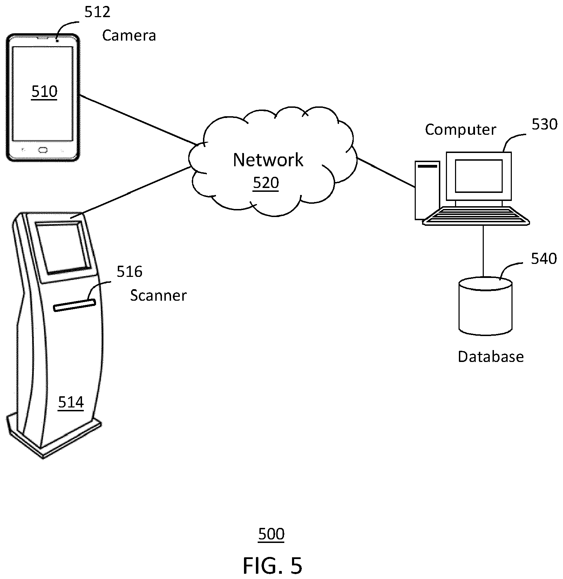

Referring now to **FIG 5**, a system 500 for classifying a type (151) of an identification (ID) document (102) by way of the methods and steps disclosed herein is provided. The system 500 comprises an electronic computing device (510) with a camera 512 for capturing an image (101) of the ID document (102), a network (520) communicatively coupled to the electronic device (510), and at least one Artificial Intelligence (Al) deep learning computational machine (530) communicatively coupled to the network 520 and a database 540. Another embodiment uses a kiosk 514 equipped with a scanner 516 to capture an image of the ID document 101 in any orientation. Images captured by the devices are represented as digital data that is communicated over the network. The machine (530) and electronic device (510) each comprise one or more central processing units (CPUs) configurable for executing computer program instructions, a memory for storing at least the computer program instructions and data, a power supply unit (PSU) for providing power to electronic components of the machine, a network interface for transmitting and receiving communications and data; and a user interface for interoperability.

With respect to the implementation of embodiments, as one example, the AI models for the CNNs may be provided as compiled binaries, or libraries, that execute as computer program instruction on the machine 530. The embedding vector is also represented as digital data that can be stored and retrieved from memory and the database. The nearest neighbor search and ranking may be performed on a single such CPU by way of compiled computer instructions for communicating with the reference database communicatively coupled thereto, to inquire, search, update, and rank the list of probable matches. The training phase 400 may be performed by the computational machine 530. The inference phase 100 may be performed in part on, either or, the computing device (510) and the computational machine 530. For example, the detection steps 200 may be performed on the computing device (510) to extract the ID document 102, which is digitized and sent over the network, and the identification steps 300 thereafter performed on the machine 530 to recognize the type of ID from the database.

The electronic computing device 510 may be any type of computing device (e.g., portable computing unit, smartphone, laptop computer, mobile phone, navigation device, game console, desktop computer system, workstation, Internet appliance and the like), or for example, the kiosk 510 with a scanner 512 for capturing the image, configured with the capability of connecting to the network 530 and consequently communicating with document identification system comprising the AI CNN models as discussed herein coupled to the reference database 322.

Network 520 may be, for example, a local area network, a wide area network, a wireless wide area network, a circuit-switched telephone network, a Global System for Mobile Communications (GSM) network, Wireless Application Protocol (WAP) network, a WiFi network, an IEEE 802.11 standards network, an Internet and other frame based or packed based network, a cloud based network with network nodes, or various combinations thereof, etc. Other networks, whose descriptions are omitted here for brevity, may also be used in conjunction with the system without departing from the scope of the present invention.

All detection modules and identification modules, together or alone, can include such a hardware processor, memory, power supply, interface device, and associated electronics for performing any and all of the methods, steps, or method steps disclosed. In other embodiments the machine 530 can be a virtual machine with multiple cores, and operating systems, wherein each CPU core, or virtual machine, can perform the steps of the methods. As an example, each aforementioned module can be written as code that is compiled down to machine readable instructions which are then executed on a machine, such as, a processor, hardware processor, CPU, micro-processor, hardware logic, EEPROM, FPGA, ASIC, or so on to perform the methods disclosed.

The system 500 provides for practice of a method for classifying a type (151) of identification (ID) document (102), whereby a device captures an image (101) or picture of the ID document (102) in part or whole, and by way of Artificial Intelligence (Al) deep learning machines orderly configured to extract, store and maintain relevant document type information for associating to said type. By way of the system, a training phase (400) is performed for acquiring said learned information of said types of said ID document from a dataset (161) of images, building AI models each of location (CNN 210), Orientation (CNN 230) and recognition (CNN 310), and creating a reference database (322) of embedding vectors. An an inference phase (100) is performed for detecting (200) and identifying (300) said type (151) from said image (101) of said identification (ID) document (102), applying a nearest neighbor search (321) within the reference database (322) using said embedding vector (312), and from results of said search (321), and presenting a list (150) of ID document types (151) ranked (323) according to a most probable match of the ID document (102) to learned types in said reference database.

In an optimal embodiment the method includes applying a convolutional neural network (CNN) to identify location information comprising bounding box information and corner information of said ID document (102) in said image 101; selecting corners and normalizing said ID document (102) in said image 101 from said location information to produce a normalized ID document image (101B); and applying an orientation classification CNN to said normalized ID document image (101B) to correctly orient (102) said ID document image. The Identification steps (310) for inference (100) and training (400) include performing Region of Interest (ROI) cropping on corrected said normalized ID document image (101B), and representing each said ROI by an embedding vector (312), wherein ROI cropping uses preset location information from registered document requirements and policy information, that provides pre-established coordinates and locations of security patterns or non-user specific feature areas on the ID document.

An image area (R,G,B) described by said preset location information can be represented by a 3D vector of red, blue, green (RBG) values, and said ROI cropping by way of convolutional neural network includes layering therein of Red, Green, and Blue (RGB) component vectors for each said ROI. This allows for applying convolution kernels on RGB component vectors to capture spatial and temporal dependencies of RGB pixels from the image area for inferring agency specific formatting requirements of said ID document including at least one among country depictions, country illustrations, country colors, watermark images, transparency strips, logos, symbols, and relative arrangements thereof in the ID document (102). In an optimal embodiment, this further allows for elastically configuring said reference database to add new documents and remove obsolete documents for later recognition of their type, by way of an identification module that adds and removes rows of embedding vectors in said reference database without re-training of said CNN.

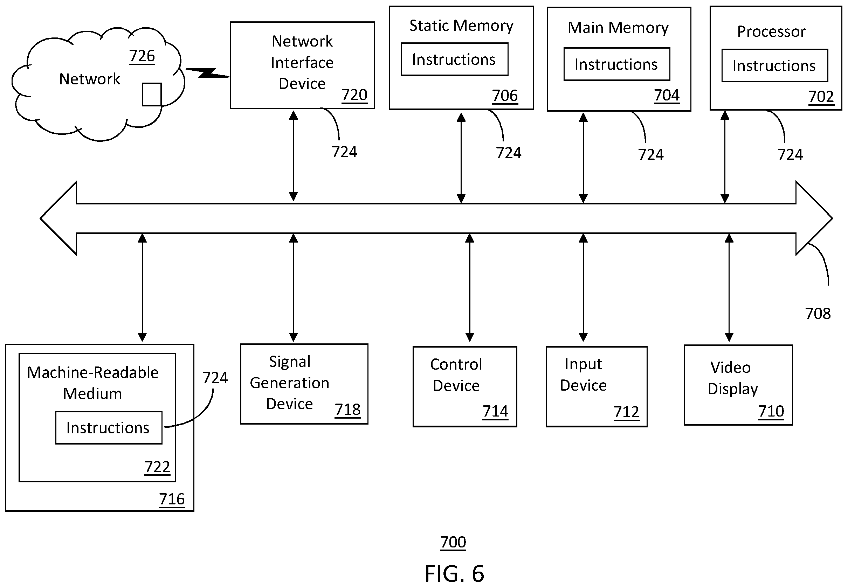

**FIG. 6** depicts an exemplary diagrammatic representation of a machine 700 and hardware platform suitable for use to perform the methods and steps exemplified in FIGS 1-4, or by components of the system 500 of FIG. 5, in accordance with various embodiments.

The machine 700 is shown in the form of a computer system 700, within which a set of instructions, when executed, may cause the machine to perform any one or more of the methodologies discussed above. In some embodiments, the machine operates as a standalone device, such as a computer, laptop, mobile device, remote control, or display. In some embodiments, the machine may be connected over the network to other machines. In a networked deployment, the machine may operate in the capacity of a server or a client user machine in server-client user network environment, or as a peer machine in a peer-to-peer, or distributed, network environment.

The machine may comprise a server computer, a client user computer, a personal computer (PC), a tablet PC, a laptop computer, a desktop computer, a mobile device, a cell phone, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system 700 may include a processor 702 (e.g., a central processing unit (CPU), a graphics processing unit (GPU, or both), a main memory 704 and a static memory 706, which communicate with each other via a bus 708. The computer system 700 may further include a video display unit 710 (e.g., a liquid crystal display or LCD), a flat panel, a solid state display, or a cathode ray tube (CRT)). The computer system 700 may include an input device 712 (e.g., a keyboard, touchless sensing unit 110), a cursor control device 714 (e.g., a mouse, touchless sensing unit 110), a disk drive unit 716, a signal generation device 718 (e.g., a speaker or remote control) and a network interface device 720.

The disk drive unit 716 may include a machine-readable medium 722 on which is stored one or more sets of instructions (e.g., software 724) embodying any one or more of the methodologies or functions described herein, including those methods illustrated above. The instructions 724 may also reside, completely or at least partially, within the main memory 704, the static memory 706, and/or within the processor 702 during execution thereof by the computer system 700. The main memory 704 and the processor 702 also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable medium 722 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

The term "machine-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the disclosure is considered to include any one or more of a machine-readable medium or a distribution medium, as listed herein and including art-recognized equivalents and successor media, in which the software implementations herein are stored.

In the above-description of various embodiments of the present disclosure, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented in entirely hardware, entirely software (including firmware, resident software, micro-code, etc.) or combining software and hardware implementation that may all generally be referred to herein as a "circuit," "module," "component," or "system." Furthermore, aspects of the present disclosure may take the form of a computer program product comprising one or more computer readable media having computer readable program code embodied thereon.

Any combination of one or more computer readable media may be used. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Scala, Smalltalk, Scheme, Go, C++, C#, VB.NET, Python or the like, conventional procedural programming languages, such as the "C" programming language, Perl, PHP, dynamic programming languages such as Python, Ruby and Groovy, or other programming languages. The program code may execute entirely on the user's computer, partly on the user's computer, as a stand-alone software package, partly on the user's computer and partly on a remote computer, entirely on the remote computer or server, or within the Cloud or other computer network. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Platform as a Service (PaaS) for connecting mobile apps to cloud based services, and Security as a Service (SECaas).

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method for classifying a type (151) of identification (ID) document (102) by way of Artificial Intelligence (Al) deep learning to associate and identify the ID document (102) against learned types from a captured image (101) or picture of the ID document (102),, **characterized in that**, the method comprises an inference phase (100), consisting of:
detection steps (200):
by way of a detection module 1 (210), applying a convolutional neural network (CNN) to identify location information comprising bounding box information and corner information of said ID document (102) in said image 101;
by way of a detection module 2 (220), selecting corners and normalizing said ID document (102) in said image 101 from said location information to produce a normalized ID document image (101B);
by way of a detection module 3 (230), applying an orientation classification CNN to said normalized ID document image (101B) to correctly orient (102) said captured image (101); and
Identification steps (300):
by way of an identification module 1 (310), performing Region of Interest (ROI) cropping on corrected said normalized ID document image (101B), and representing each said ROI by an embedding vector (312); and
by way of an identification module 2 (320),
applying a nearest neighbor search (321) within a reference database (322) using said embedding vector (312), and from results of said search, and
presenting a list (150) of ID document types (151) ranked (323) according to a most probable match of the ID document (102) to learned types in said reference database (322).

2. The method of claims 1, wherein the image (101) is represented by a 3D vector of red, blue, green (RBG) values, and said ROI cropping by way of convolutional neural network includes layering therein of Red, Green, and Blue (RGB) component vectors for each said ROI, and said convolutional neural network (CNN) applies convolution kernels on said RGB component vectors to capture spatial and temporal dependencies of RGB pixels.

3. The method of claims 2, wherein said spatial and temporal dependencies of RGB pixels are inferred from one among country depictions, country illustrations, country colors, watermark images, transparency strips, logos, symbols, and relative arrangements thereof in the ID document (102).

4. The method of claims 1, where said type (151) indicates one of:
a country, a state, or city, and
an issuing agency, department, or bureau.

5. The method of claim 1, wherein said reference database (322) is elastically configured, by way of identification module 1 (310) to add new documents and remove obsolete documents for recognition of their type, through addition and removal of embedding vectors (410) in a table (420) in said reference database without re-training.

6. The method of claim 1, wherein the method further comprises:
a training phase (400) for acquiring said learned information of said types of said ID document in said reference database, consisting of:
said detection module 1 (210) applies supervised multi-task learning by way of said convolutional neural network (CNN) for ID document detection to produce as output, location information of portions of known images of ID documents in any scene and orientation;
said detection module 3 (230) applies supervised classification learning by way of an orientation classification CNN to produce as output, orientation information for each of said portions from images of cropped ID document in any orientation using said location information; and
said identification module 1 (310) applies unsupervised learning by way of a recognition CNN to learn Regions of Interest (ROIs) from said orientation information to produce as output, an embedding vector for storage to said reference database.

7. The method of claims 6, where said type (151) of ID document (102) is learned, and determined, according to a format and presentation requirement of an issuing agency, bureau, or service provider of said ID document for said ID document.

8. The method of claims 6, wherein said convolutional neural network (CNN) applies down sampling to reduce a dimensionality of said embedding vector.

9. A method for classifying a type (151) of identification (ID) document (102), whereby a device captures an image (101) or picture of the ID document (102) in part or whole, and by way of Artificial Intelligence (Al) deep learning machines orderly configured to extract, store and maintain relevant document type information for associating to said type, **characterized in that**, the method comprises,
a training phase (400) for
acquiring said learned information of said types of said ID document from a dataset (161) of images,
building AI models each of location (CNN 210), orientation (CNN 230) and recognition (CNN 310), and
creating a reference database (322) of embedding vectors; and
an inference phase (100) for
detecting (200) and identifying (300) said type (151) from said image (101) of said identification (ID) document (102),
applying a nearest neighbor search (321) within the reference database (322) using said embedding vector (312), and from results of said search (321), and
presenting a list (150) of ID document types (151) ranked (323) according to a most probable match of the ID document (102) to learned types in said reference database.

10. The method of claim 9, wherein detection steps (200) comprise:
applying a convolutional neural network (CNN) to identify location information comprising bounding box information and corner information of said ID document (102) in said image 101;
selecting corners and normalizing said ID document (102) in said image 101 from said location information to produce a normalized ID document image (101B); and
applying an orientation classification CNN to said normalized ID document image (101B) to correctly orient (102) said ID document image.

11. The method of claim 10, wherein Identification steps (310) for inference (100) and training (400) comprise:
performing Region of Interest (ROI) cropping on corrected said normalized ID document image (101B), and representing each said ROI by an embedding vector (312), wherein ROI cropping uses preset location information from registered document requirements and policy information, that provides pre-established coordinates and locations of security patterns or non-user specific feature areas on the ID document.

12. The method of claim 11, wherein an image area (R,G,B) described by said preset location information is represented by a 3D vector of red, blue, green (RBG) values, and said ROI cropping by way of convolutional neural network includes layering therein of Red, Green, and Blue (RGB) component vectors for each said ROI for:
applying convolution kernels on RGB component vectors to capture spatial and temporal dependencies of RGB pixels from the image area for inferring agency specific formatting requirements of said ID document including at least one among country depictions, country illustrations, country colors, watermark images, transparency strips, logos, symbols, and relative arrangements thereof in the ID document (102).

13. The method of claim 11, further comprising elastically configuring said reference database to add new documents and remove obsolete documents for later recognition of their type, by way of an identification module that adds and removes rows of embedding vectors in said reference database without re-training of said CNN.

14. A system (500) for classifying a type (151) of an identification (ID) document (102); the system comprising:
an electronic device (510) for capturing an image (101) of the ID document (102);
a network (530) communicatively coupled to the electronic device (510); and
at least one Artificial Intelligence (Al) deep learning machine (530) communicatively coupled to the network;
**characterized in that** at least one machine (530) performs the methods of claims 1-10.

15. The system of claim 14, wherein the machine (530) and electronic device (510) each comprise:
one or more central processing units (CPUs) for executing computer program instructions;
a memory for storing at least the computer program instructions and data;
a power supply unit (PSU) for providing power to electronic components of the machine;
a network interface for transmitting and receiving communications and data; and
a user interface for interoperability.
